# EUROPEAN PATENT SPECIFICATION

(11) **EP 2 000 425 B1**
(45) Date of publication and mention of the grant of the patent: **30.12.2009**
(21) Application number: 07019363.6
(22) Date of filing: 02.10.2007
(51) Int. Cl.: B65G 23/22, B65G 47/52, B65G 47/66

(54) **Link conveyor**
Kettenförderer
Convoyeur de lien

(30) Priority: 04.06.2007 JP 2007148500
(43) Date of publication of application: 10.12.2008
(73) Proprietor: Misuzu Koki Company Limited, Yokkaichi-shi Mie 510-0103 (JP)
(72) Inventor: Yagi, Shigeru, Hiratsuka-shi Kanagawa-ken (JP); Gomi, Kazutake, Minato-ku Tokyo (JP)
(74) Representative: Müller-Boré & Partner Patentanwälte

(56) References cited:
- DE-A1- 2 262 888
- DE-U1- 9 212 012
- US-A- 5 131 529

## Description

### TECHNICAL FIELD

The present invention relates to a conveyor, and in detail relates to a link conveyor for connecting between respective drive conveyors by being installed between two linked drive conveyors.

### BACKGROUND ART

A drive conveyor for conveying small items such as articles of food has a belt for transmitting drive force from a drive roller bridging between drive rollers of a link section of a generally connected drive conveyor, and a plurality of rollers for simply causing conveyance drive of the belt, as well as being capable of supported conveyed small items such as articles of food placed upon the belt, are provided at intermediate sections also.
Therefore, a drive conveyor is used fixed at a specified length, but it is common practice for there to be cases where a plurality of drive conveyors are provided in a linked fashion, depending on the layout within a factory or the distance between machinery and equipment etc.

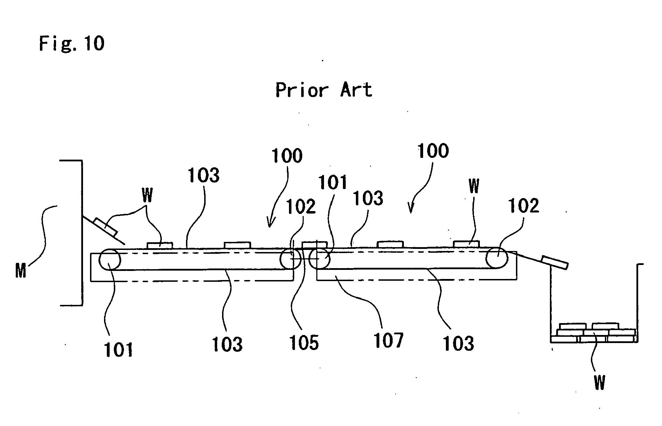

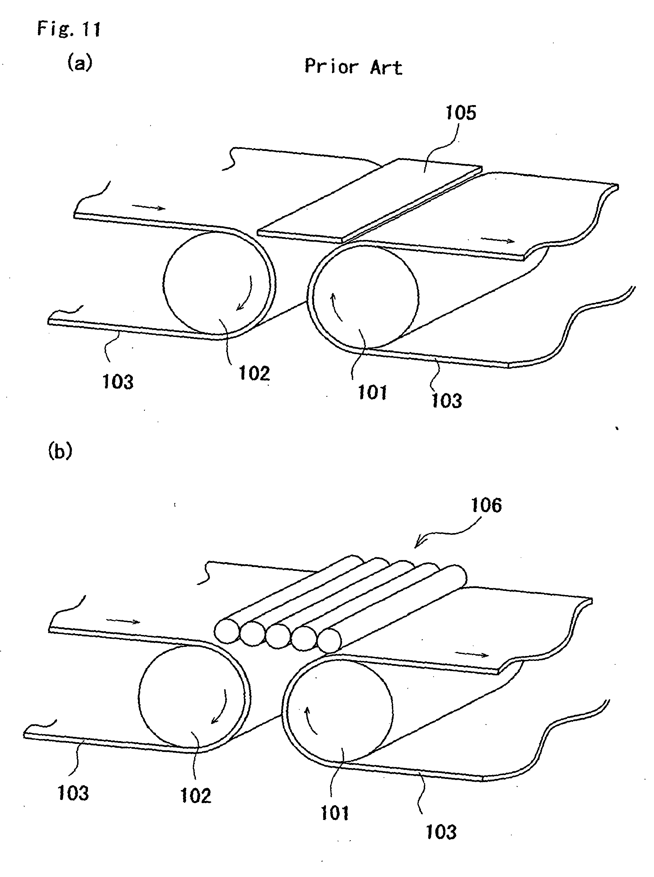

Specifically, a related art drive conveyor for conveying objects to be conveyed W that are small items such as articles of food, will be described in the following, and is shown in Fig 10. The drive conveyor 100 is provided, at one end of a conveyor body, with a pulley 101 driven by a drive section, as well as a freely rotating pulley 102 at the other end of the conveyor body, with a conveyor belt 103 bridging between the pulley 101 and the pulley 102.
With this related art example, two drive conveyors 100 are used connected together, with one drive conveyor 100 being provided with one end of the conveyor belt 103 positioned at a carrying out section M1 of a manufacturing machine M, and objects W that are being conveyed being placed upon the conveyor belt 103. The drive conveyor 100 carries the placed objects to be conveyed W to the other end. Then, objects to be conveyed W that have been moved to the other end are transferred to the other drive conveyor 100 that is arranged so as to be contiguous to the drive conveyor 100. A plurality of connected drive conveyors 100 are then integrated using a conveyor frame 107, and installed to that there is no positional displacement between the drive conveyors 100.
At this time, objects to be conveyed W may drop into link sections that are gap sections between the connected drive conveyors 100 because the respective conveyor pulleys 101 and 102 have a large radius. The related art for preventing this has plate-shaped sheets 105 fitted across the gaps, and the objects to be conveyed W slide diagonally down on the chutes 105 to change onto the adjacent drive conveyor 100.
The chutes 105 are for simply transferring the objects to be conveyed W, and can use single plate shaped members as shown in Fig. 11 (a), or a plurality of roller conveyors, or rollers 106 that transmit rotational drive force of the pulley 102 or the pulley 101 and are arranged side by side.

However, with this related art example 1, objects to be conveyed W that are conveyed between the drive conveyors 100 are squeezed against the conveyor 100 in the state of being position on the drive conveyor 100 and pass through the chute 105 and the rollers 106 and so, depending on the situation, problems occur such as transfer of objects to be conveyed W being stopped, or transfer of objects to be conveyed W falling behind at the gap sections. Further, even in the case of the rollers 106, there is a problem of objects to be conveyed getting caught between the rollers 106.

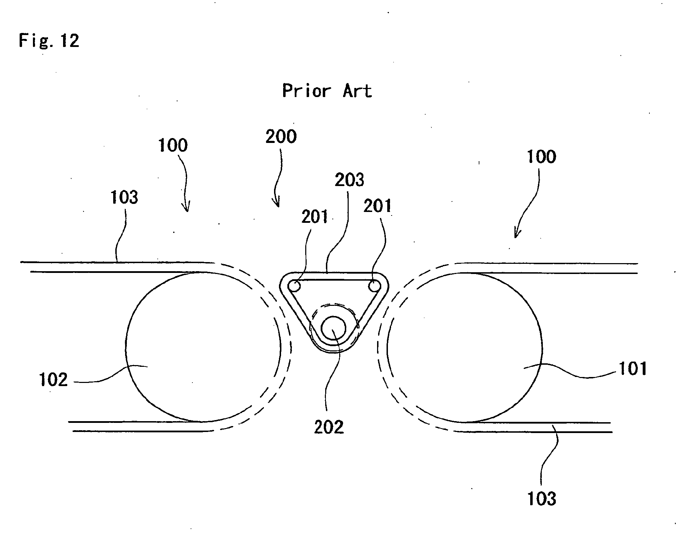

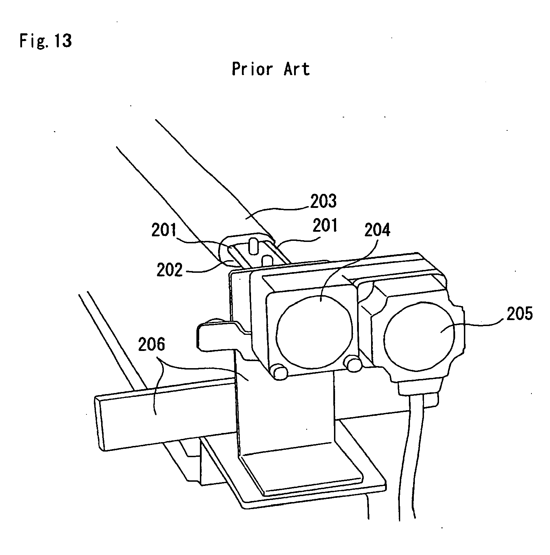

Therefore, in order to solve the above described problems of the objects to be conveyed W falling behind, small-sized conveyors themselves having conveyance drive power are used at the sections also. Specifically, link conveyors.
With this link conveyor 200, as shown in Fig. 12, extremely small diameter slide shafts 201 are arranged at the side of each adjacent drive conveyor 100 in the gap between the connected drive conveyors 100, and also, a drive sprocket 202 having a small diameter is arranged beneath the slide bearings 201, and a conveyor belt 103 is wound around the slide bearings 201 and the drive sprocket 202. Accordingly, the conveyance length of the link conveyor 200 is extremely short, and the diameters of the slide bearings 201 and drive sprocket 202 are small, so a bridging chain belt 203 also becomes a caterpillar type chain belt 203 that is an assembly of parts as small as about 5 mm in the conveyance direction.
Thus, as shown in Fig. 13, the related art link conveyor 200 is a mechanism for driving the drive sprocket 202 using a drive motor 205 and gear shift means 204.

However, the related art link conveyor 200 constructed as described above has its shape held by a frame 206, but since the frame 206 is reliably fixed by fixing means such as bolt nuts to the conveyor frame 207 of the drive conveyor 100 so that relative position of the link conveyor 200 and the drive conveyor 100 does not move, at a time when the link conveyor 200 itself is being repaired, or when repairing between drive conveyors 100, it is necessary to remove all fixing means such as bolt nuts in order to remove the link conveyor 200, and so there is a problem that an extremely long working time is required in order to attach and remove the link conveyor 200.

In particular, in a factory that operates 24 hours a day etc., stopping a production line incurs production loss, and so there is a problem that with repair and maintenance etc., even if it is necessary to repair the link conveyor 200 in as short a time as is possible, some time will be taken.

DE 2 262 888 A1 discloses a continuously delivery device for cookies which is located between a sticking oven and a backing oven, wherein beyond the delivery conveyor a delivery support is provided, which is e.g. a driven towing conveyor.

The present invention has therefore been conceived in view of the above-described problems, and aims to provide a link conveyor capable of easily being attached to or removed from a drive conveyor, as well as being able to reliably position the link conveyor.

### DISCLOSURE OF THE INVENTION

This invention provides, in order to simplify attachment and removal of a link conveyor fixed between drive conveyors,
a link conveyor, arranged at link sections between drive conveyors arranged adjacently, for continuously conveying objects to be conveyed, comprising:
a pair of fixed drive sections, arranged facing width direction end sides of the drive conveyors arranged adjacent to the link sections, and fixed to a frame of the conveyor, each provided with one of drive sections for driving the link conveyor; and
a mounting/unmounting unit constituting a conveyance section with a chain belt, formed using a caterpillar type belt, bridging between a drive shaft and a bridging shaft, wherein
drive force transmission engagement means capable of transmitting drive power as well as axially supporting the drive shaft of the mounting/unmounting unit in a detachable manner, is provided at the pair of fixed drive sections, engagement means that can be attached to and detached from the drive force transmission engagement means is provided on the drive shaft of the mounting/unmounting unit, and the mounting/unmounting unit is freely attachable to or detachable from the fixed drive sections.

In this way, the link conveyor is formed from a pair of fixed drive sections and a mounting/unmounting unit, and the fixed drive sections are fixed to respective drive conveyor frames to determine relative position of the drive conveyors. Also, in the mounting/unmounting unit, drive force is transmitted to the drive shaft of the mounting/unmounting unit by the engagement means being engaged with the drive force transmission engagement means provided on the fixed drive sections, the chain belt wound on the drive shaft and the bridging shaft it retractably driven, and in the link sections objects to be conveyed that have been conveyed from the upstream drive conveyor are conveyed to the downstream drive conveyor. Incidentally, the drive sections for driving the link conveyor can drive the link conveying by providing drive means itself, such as a drive motor, and can also be constructed so as to drive the link conveyor by receiving supply of drive force from a drive conveyor arranged adjacently.

Further, with the present invention, there is provided a link conveyor, arranged at link sections between drive conveyors arranged adjacently, for continuously conveying objects to be conveyed, comprising:
a pair of fixed drive sections, arranged facing width direction end sides of the drive conveyors arranged adjacent to the link sections, and fixed to a frame of the conveyor, each provided with one of drive sections for driving the link conveyor; and
a mounting/unmounting unit constituting a conveyance section with a chain belt, formed using a caterpillar type belt, bridging between a drive shaft and a bridging shaft, wherein drive force transmission engagement means, providing unit engagement means capable or detachably attaching the mounting/unmounting unit, and capable of transmitting drive power by axially supporting the drive shaft of the mounting/unmounting unit, is provided at the pair of fixed drive sections, engagement fixing means that can be engaged with the unit engagement means is provided on the mounting/unmounting unit, as well as engagement means freely attached or detached to and from the drive force transmission engagement means being provided on the drive shaft, and the mounting/unmounting unit is freely attachable to or detachable from the fixed drive sections.

In this way, the unit engagement means of the fixed drive sections becomes capable of inter-attachment fixing in a freely detachable manner with the engagement means of the mounting/unmounting unit, and make attachment between the fixed drive means and the mounting/unmounting unit reliable at the time of attachment. Also, the drive force transmission engagement means of the fixed drive sections and the engagement means of the mounting/unmounting unit can transmit drive force, and are axially supported in a detachable manner, and the mounting/unmounting unit is more reliably attached to the fixed drive sections. Incidentally, similarly to as described above, the drive sections for driving the link conveyor can drive the link conveying by itself being provided with drive means, and can also be constructed so as to drive the link conveyor by receiving supply of drive force from a drive conveyor arranged adjacently.

Further, with the present invention, as a link conveyor provided with drive means in a mounting/unmounting unit, there is provided a link conveyor, arranged at link sections between drive conveyors arranged adjacently, for continuously conveying objects to be conveyed, comprising:
a pair of engagement fixing sections, arranged facing width direction end sides of the drive conveyors arranged adjacent to the link sections, and fixed to a frame of the conveyor, capable of supporting the link conveyor; and
a mounting/unmounting unit constituting a conveyance section with a chain belt, formed using a caterpillar type belt, bridging between a drive shaft and a bridging shaft, and providing drive means capable of driving the drive shaft, wherein
   unit engagement means capable or detachably attaching the mounting/unmounting unit is provided on a pair of engagement fixing sections, engagement fixing means capable of engagement with the unit engagement means is provided on the mounting/unmounting unit, wherein the mounting/unmounting unit is freely attachable to or detachable from the engagement fixing sections, and further as a link conveyor for reliable engagement at the time of mounting to the engagement fixing sections of the mounting/unmounting unit, there is provided a link conveyor for continuously conveying objects to be conveyed arranged at link sections between drive conveyors arranged adjacently, comprising
a pair of engagement fixing sections, arranged facing width direction end sides of the drive conveyors arranged adjacent to the link sections, and fixed to a frame of the conveyor, capable of supporting the link conveyor; and
a mounting/unmounting unit constituting a conveyance section with a chain belt, formed using a caterpillar type belt, bridging between a drive shaft and a bridging shaft, and providing drive means capable of driving the drive shaft, wherein
drive shaft engagement means, providing unit engagement means capable of detachably attaching the mounting/unmounting unit, and axially supporting the drive shaft of the mounting/unmounting unit in a detachable manner, is provided at the pair of engagement fixing sections, engagement fixing means that can be engaged with the unit engagement means is provided on the mounting/unmounting unit, as well as engagement means freely attached or detached to and from the drive shaft engagement means also being provided on the drive shaft, and the mounting/unmounting unit is freely attachable to or detachable from the engagement fixing sections.

In this manner, a link conveyor having a mounting/unmounting unit capable of attachment and detachment to and from engagement fixing section also, similarly to the link conveyor capable of attaching and detaching the mounting/unmounting unit to and from the fixed drive sections, simplifies attachment a mounting/unmounting unit in a removed state to the engagement fixing sections by causing engagement between the drive shaft engagement means and the engagement means, and further between the unit engagement means and the engagement means.

Accordingly, with this invention, a link conveyor is constructed from fixed drive sections that are fixed to a frame of a drive conveyor at link sections, and a mounting/unmounting unit freely attachable to and detachable from the fixed drive sections, and drive force for the fixed drive sections is transmitted to the mounting/unmounting unit despite the mounting/unmounting unit being formed freely attachable and detachable at link sections, which means that reliable positional fixing of the link conveyor at the link sections is achieved, and also there is the effect of making opening up of the link sections easy by removing the mounting/unmounting unit.
As a result, for example, when a plurality of mounting/unmounting units are prepared, and an accident such as breakage of the chain belt of the mounting/unmounting unit occurs, then even if fault due to such an accident arises, then by quickly removing the mounting/unmounting unit that has been involved in the accident and replacing with a normally working mounting/unmounting unit the fault can be promptly fixed, which means that it is possible to derive the advantage whereby the time for which operation of a food factory or the like is stopped is shortened.

### BRIEF DESCRIPTION OF THE DRAWINGS

Fig. 1 is a side schematic drawing showing a positional relationship of the embodiment of the invention.
Fig. 2 is a plan explanatory drawing showing the embodiment of the invention.
Fig. 3 is a side explanatory drawing showing the embodiment of the invention.
Fig. 4 is a front explanatory drawing showing the embodiment of the invention.
Fig. 5 is a partially expanded front explanatory drawing showing a fixed drive unit section enlarged.
Fig. 6 shows a sleeve, which is drive force transmission engagement means, with (a) being a central cross sectional explanatory drawings, (b) being a left side view, and (c) being a right side view.
Fig 7 is an explanatory drawing showing a mounting/unmounting unit, with (a) being a front explanatory drawings, (b) being a plan explanatory drawing and (c) being an enlarged front explanatory drawings of an end section.
Fig. 8 is a plan explanatory drawing showing a latch unit section.
Fig 9 is an explanatory drawing showing a latch, with (a) being a side explanatory drawings, (b) being a plan explanatory drawing and (c) being a front explanatory drawing.
Fig. 10 is an overall explanatory drawing showing a related art example.
Fig. 11 is an enlarged explanatory drawing showing a related art example of a link section.
Fig. 12 is a schematic explanatory drawing showing a link conveyor of the related art.
Fig. 13 is a perspective explanatory drawing showing a link conveyor of the related art.

### BEST MODE FOR CARRYING OUT THE INVENTION

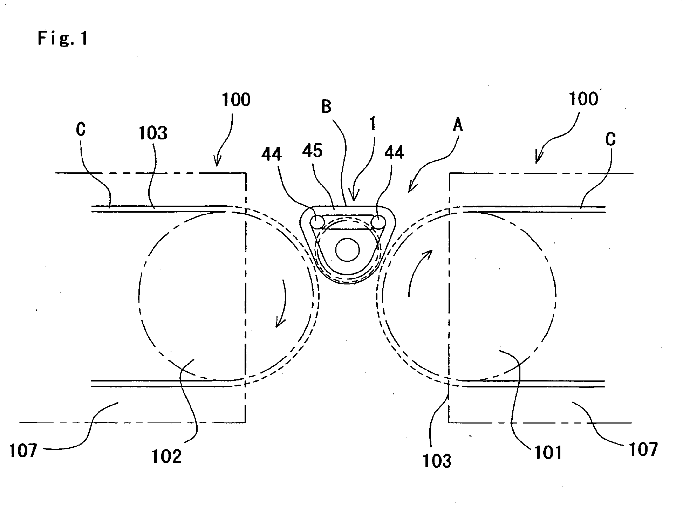

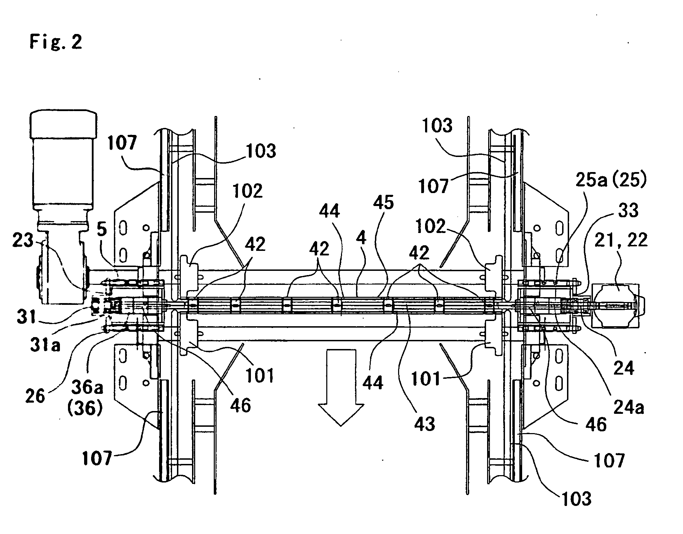

As shown in Fig. 1, a link conveyor 1 is positioned in a link section A constituting a gap between connected drive conveyors 100, and is fixed to a frame 107 of the drive conveyor 100.
The link conveyor 1 has a conveyance surface formed on its upper surface, and is provided at the same level as the conveyance surface of the drive conveyor 100.
The link conveyor 1 positioned at the link section A in this way is comprised of a fixed drive unit 2, being one fixed drive secton, a fixed bearing unit 3 being another fixed drive section, and a mounting/unmounting unit 4 that is freely attachable and detachable with respect to the fixed drive unit 2 and the fixed bearing unit 3, as shown in Fig. 2 to Fig. 4.

The fixed drive unit 2 and the fixed bearing unit 3 are positioned facing each other at outer sides in the conveyance width direction of the drive conveyor 100, and are fixed to a frame 107 of the drive conveyor 100.
In the fixed drive unit 2, a drive motor 21 and governor 22 are provided on a fixed frame 23 as drive means. The fixed frame 23 of the fixed drive unit 2 is fixed to the frame 107 using bolt nuts or the like.

Drive force due to the drive motor 21 of the fixed drive means 2 is transmitted via the governor 22 to the drive shaft 24, and the drive shaft 24 is rotatably driven. Therefore, one end of the drive shaft 24 is connected to the governor 22, and drive force transmission engagement means 25 is provided on the other end of the drive shaft. The drive force transmission engagement means 25 is for engaging a key groove 25c by sliding onto a key projection section 46a of a sprocket shaft 43 of the mounting/unmounting unit 4, and causes conveyance drive force of the mounting/unmounting unit 4 by transmitting shaft rotation to the mounting/unmounting unit 4.
Further, a pin bracket 26, being a unit engagement section, is provided at an upper position of the fixed frame 23, above the drive force transmission engagement means 25. A latch hole 27 is formed in the pin bracket 26, and a latch unit 5, being latch fixing means provided on the mounting/unmounting unit 4, can be latched.

The fixed bearing unit 3 is provided with a free shaft 31 so as to face the drive shaft 24 of the fixed drive unit 2. The free shaft 31 is fixed to the frame 107 using a fixed frame 33, similarly to the fixed drive unit 2. Accordingly, a drive force transmission engagement section 36, being drive force transmission engagement means, is provided on a fixed drive unit 2 side of the free shaft 31. This drive force transmission engagement section 36 is freely attachable and detachable with respect to the mounting/unmounting unit 4, and is axially supported so that axial rotation of the mounting/unmounting unit 4 is free.
Further, a pin bracket 34, is provided at an upper position of the fixed frame 33, above the drive force transmission engagement section 36. A latch hole 35 is formed in the pin bracket 34, and a latch unit 5, being latch fixing means provided on the mounting/unmounting unit 4, can be latched.

The mounting/unmounting unit 4 can be freely attached or detached between the fixed drive unit 2 and the fixed bearing unit 3, and in a state where the fixed drive unit 2 and the fixed bearing unit 3 are fixedly engaged, a chain belt 41 is suspended so as to correspond to the width of the conveyor belt 103 of the drive conveyor 100. A sprocket shaft 43 having a plurality of drive sprockets 42 fixed thereto at specified intervals for linking to the chain belt 41 is provided on the mounting/unmounting unit 4, slide shafts 44 cross linking the chain belt 41 are provided at an upper part of the sprocket shaft 43 facing horizontally, and a distance between centers of two slide shafts 44 becomes the conveyance length of the link conveyor 1. Also, flat-plate shaped slide plates 45 are arranged between two slide shafts 44, so as to be the same height as the slide shafts 44, and support a load from above the chain belt 41.

A shaft connection section 46, being engagement means capable of freely detachably engaging with the drive shaft 24 of the respective fixed drive unit 2 and the free shaft 31 of the fixed bearing unit 3, is provided on both end sections of the sprocket shaft 43 constituting both ends of the mounting/unmounting unit 4 having a large conveyance width and short elongated shape. The shaft connecting section 46 is in a state where rotational force of the drive shaft 24 is transmitted, and not fixed to the drive shaft 24.
Also, a latch unit 5, being latch fixing means, is provided above the shaft connecting section 46. The latch unit 5, at the time of attachment, is capable of locking by passing through the latch hole 27 of the fixed drive unit 2 and the latch hole 35 of the fixed bearing unit 3, and when removed is capable of being pulled out from the latch hole 27 and the latch hole 35 by movement of a pin etc. Then, in the mounting/unmounting unit 4, the drive sprocket 42, sprocket shaft 43, slide shafts 44, slide plates 45 and latch unit 5 are respectively located by the mounting/unmounting unit frame 47.

### [Embodiment 1]

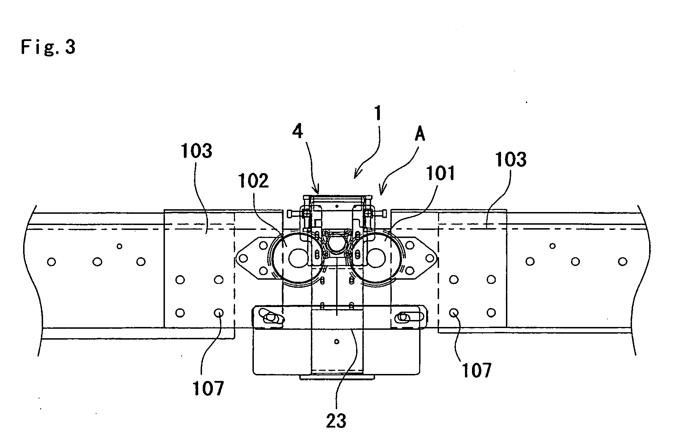

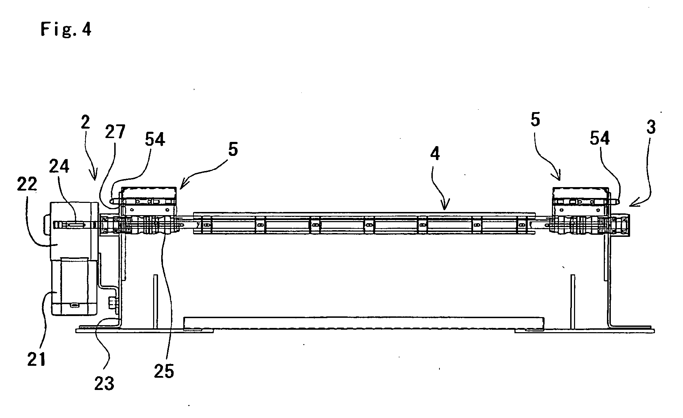

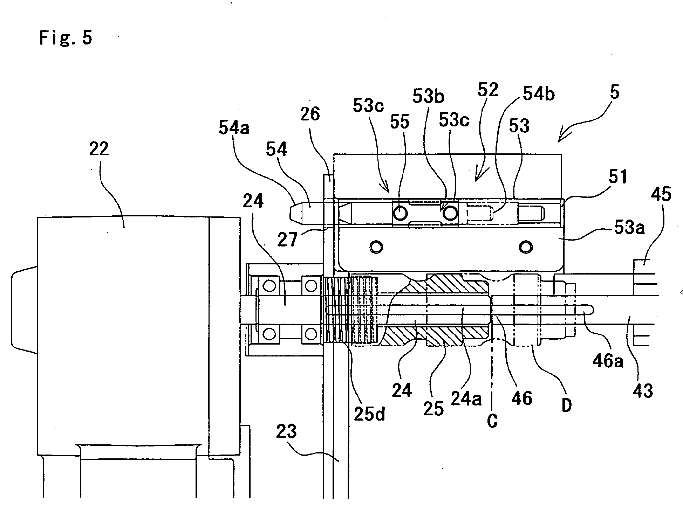

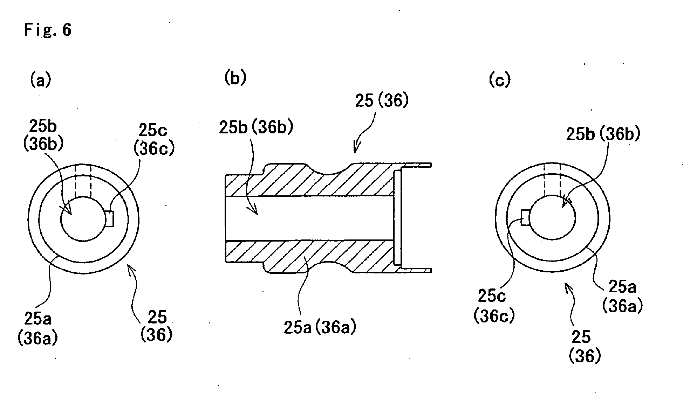

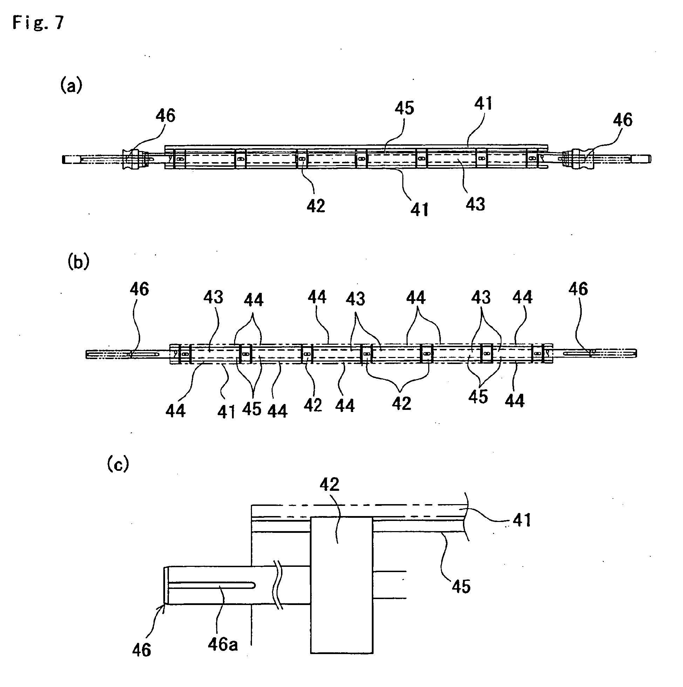

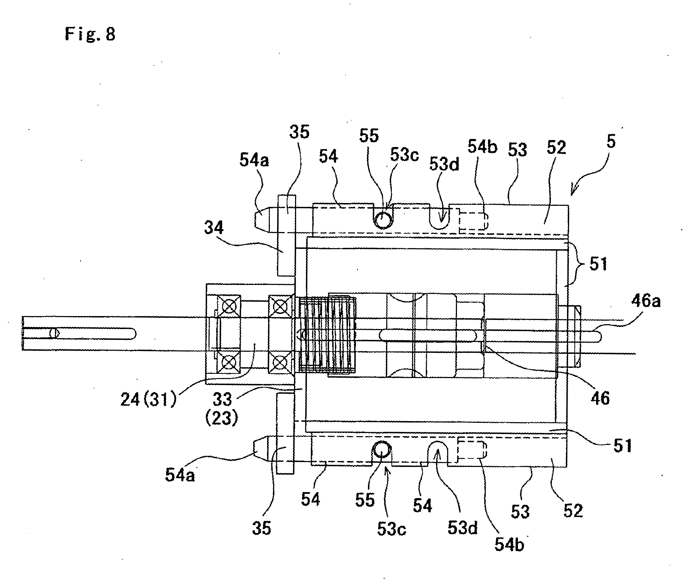

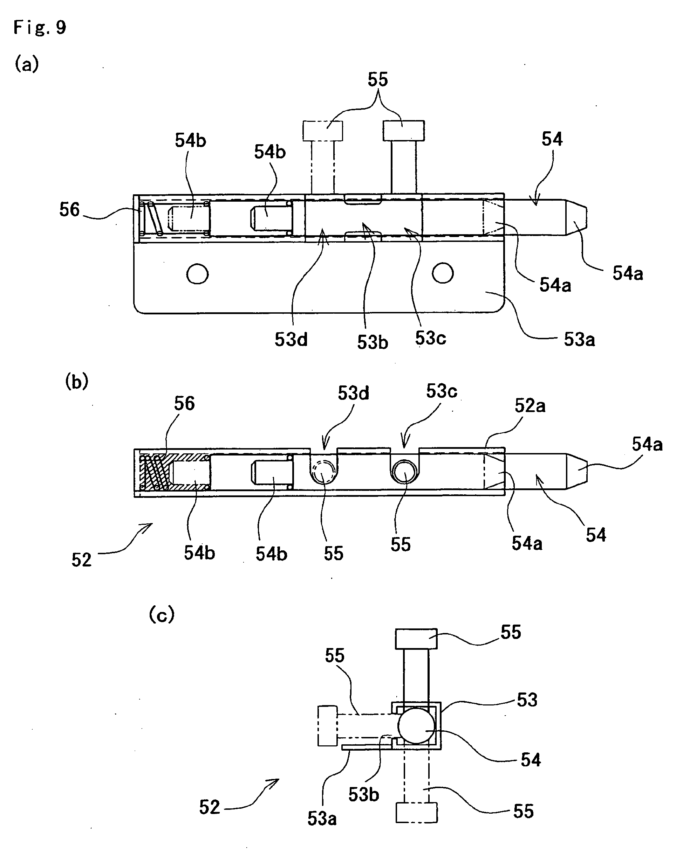

An embodiment of the present invention will be described in the following based on the drawings. Fig. 1 is a side schematic drawing showing a positional relationship of the embodiment of the invention, Fig. 2 is a plan explanatory drawing showing the embodiment of the invention, Fig. 3 is a side explanatory drawing showing the embodiment of the invention, Fig. 4 is a front explanatory drawing showing the embodiment of the invention, Fig. 5 is a partially expanded front explanatory drawing showing a fixed drive unit section enlarged, Fig. 6 shows a sleeve, which is drive force transmission engagement means, with (a) being a central cross sectional explanatory drawings, (b) being a left side view, and (c) being a right side view, Fig. 7 is an explanatory drawing showing a mounting/unmounting unit, with (a) being a front explanatory drawings, (b) being a plan explanatory drawing and (c) being an enlarged front explanatory drawings of an end section, Fig. 8 is a plan explanatory drawing showing a latch unit section, and Fig. 9 is an explanatory drawing showing a latch, with (a) being a side explanatory drawing, (b) being a plan explanatory drawing and (c) being a front explanatory drawing.

1 represents a link conveyor. The link conveyor 1 is arranged at a link section A where linking sections of comparatively long conveyance length drive conveyors 100 that are normally used occur, and is a conveyor for smoothing transfer of objects to be conveyed W between an upstream drive conveyor 100 and a downstream drive conveyor 100, and is a conveyor with an extremely short conveyance length. The link conveyor exemplified in this embodiment has a conveyance length of 40 mm. The link conveyor 1 having a conveyance length of 40 mm is used in cases where the radius of a pulley 102 of an upstream drive conveyor 100 and the radius of a pulley 101 of a downstream drive conveyor 100, being adjacent conveyors, are 39 mm, and a central gap between the pulley 102 of the upstream drive conveyor 100 and the pulley 101 of the downstream drive conveyor 100 is 103 mm. Incidentally, for example, in cases where the radius of a pulley 102 of an upstream drive conveyor 100 and the radius of a pulley 101 of a downstream drive conveyor 100, being adjacent conveyors, are 44 mm, and a central gap between the pulley 102 of the upstream drive conveyor 100 and the pulley 101 of the downstream drive conveyor 100 is 133 mm, a link conveyor 1 having a conveyance length of 70 mm is used. The conveyance lengths of these link conveyors 1 is appropriately determined from the extent of the link sections A and pulley diameter of adjacent drive conveyors100. As shown in Fig. 1, when the link conveyor 1 is positioned at the link section A the conveyance surface B is positioned so as to be aligned with the adjacent conveyance surfaces C of the upstream drive conveyor 100 and the downstream drive conveyor 100. Then, as shown in Fig. 1, a link conveyor 1 is positioned in a link section A, and is fixed to a frame 107 of the drive conveyor 100.
The link conveyor 1 positioned at the link section A is comprised of a fixed drive unit 2, being one fixed drive section, a fixed bearing unit 3 being another fixed drive section, and a mounting/unmounting unit 4 that is freely attachable and detachable with respect to the fixed drive unit 2 and the fixed bearing unit 3, as shown in Fig. 2 to Fig. 4. By providing the mounting/unmounting unit 4 independently in this way, it becomes possible to freely attach and detach the fixed drive unit 2 and the fixed bearing unit 3 to and from the mounting/unmounting unit 4. The fixed drive unit 2 and the fixed bearing unit 3 are positioned facing each other at outer sides in the conveyance width direction of the drive conveyor 100, and are fixed to frame 107 of the drive conveyor 100.

In the fixed drive unit 2, a drive motor 21 and governor 22 are provided on a fixed frame 23 as drive means. Also, the fixed frame 23 of the fixed drive unit 2 is fixed to the frame 107 using bolt nuts or the like.
Drive force due to the drive motor 21 of the fixed drive unit 2 is transmitted via the governor 22 to the drive shaft 24, and the drive shaft 24 is rotatably driven. Therefore, one end of the drive shaft 24 is connected to the governor 22, and drive force transmission engagement means 25 is provided on the other end of the drive shaft 24. The drive force transmission engagement means 25 is for engaging by sliding onto a key projection section 46a of a sprocket shaft 43 of the mounting/unmounting unit 4, and causes conveyance drive force of the mounting/unmounting unit 4 by transmitting shaft rotation to the mounting/unmounting unit 4. Incidentally, with this embodiment the drive motor 21 and the governor 22 are provided in the fixed drive unit 2 to apply drive force of the link conveyor 1, but it is also possible to have a configuration where the link conveyor 1 is driven by receiving drive force via pulleys and belts from adjacent drive conveyors 100.

Further, a pin bracket 26, being a unit engagement section, is provided at an upper position of the fixed frame 23, above the drive force transmission engagement means 25. A latch hole 27 is formed in the pin bracket 26, and a latch unit 5, being latch fixing means provided on the mounting/unmounting unit 4, can be latched.
As shown in Fig. 5, which is an external section enlarged front explanatory view, the drive force transmission engagement means 25 is positioned with a tip of the drive shaft 14 at C in the drawing, and the drive force transmission engagement means 25 is provided as a sleeve 25a. As shown in Fig. 6, the sleeve 25a has a through hole 25b formed capable of having the drive shaft 24 pass though it, and a key groove 25c is further formed at an inner surface of the through hole 25b running the entire length of the through hole 25b. A key projection 24a provided on the drive shaft 24 is capable of passing through this key groove 25c, and when the drive shaft 24 passes through the sleeve 25a the key groove 25c and the key projection 24a are inserted capable of sliding, which means that the sleeve 25a is capable of sliding in the longitudinal direction of the drive shaft 24, but since the key groove 25c and the key projection 24a are engaged with each other the sleeve 25a is not able to move in the rotation direction of the drive shaft 24 and the sleeve 25a also rotates with the rotation.

As shown in Fig. 5, a coil spring 25d is provided on a fixed frame 23 side of the sleeve 25a. The coil spring 25d has a base edge section supported by the fixed frame 23 and has the other end positioned inside the sleeve 25a, and normally urges the sleeve 25a to the position D shown in Fig. 5. Accordingly, in this state the sprocket shaft 43 of the mounting/unmounting unit 4 is encapsulated in the sleeve 25a, and at a part of the sprocket shaft 43 that enters into the sleeve 25a also a projecting section similar to the drive shaft 24 is formed, which means a state inserted into and engaged with the key groove 25c is entered, and the sprocket 43 also rotates together with the rotation of the sleeve 25a.
A base end side of the drive shaft 24 is linked to gear change means inside the governor 22, and as a result of the governor 22 being rotatable driven by the drive motor 21 the drive shaft 24 also rotates, but the method of rotatably driving the drive shaft 24 is just the same as for the drive conveyor unit of the related art and so description is omitted.

The fixed bearing unit 3 is constructed in the same way as the fixed drive unit 2, apart from the difference that the drive motor 21 of the fixed drive unit 2 and the governor 22 are not provided. Specifically, a free shaft 31 is provided in the fixed bearing unit 3 so as to face the drive shaft 24 of the fixed drive unit 2. The free shaft 31 is fixed to the frame 107 using a fixed frame 33, similarly to the fixed drive unit 2. Accordingly, a drive force transmission engagement section 36, being drive force transmission engagement means, is provided on an end section similar to the fixed drive unit 2 side of the free shaft 31. This drive force transmission engagement section 36 is for engaging by sliding onto the key projection section 46a of the sprocket shaft 43 of the mounting/unmounting unit 4, and supports a shaft of the mounting/unmounting unit 4 so as to be freely rotatable. A drive force engagement section 36 is provided on the free shaft 31 as a sleeve 36a, at a side surface on the fixed drive unit 2 side. Similarly to the sleeve 25a shown in Fig. 6, the sleeve 36a has a through hole 36b formed capable of having the free shaft 31 pass though it, and a key groove 36c is further formed at an inner surface of the through hole 36b running the entire length of the through hole 36b. A key projection 31a provided on the free shaft 31 is capable of passing through this key groove 36c, and when the free shaft 31 passes through the sleeve 36a the key groove 36c and the key projection 31a are inserted capable of sliding which means that the sleeve 36a is capable of sliding in the longitudinal direction of the free shaft 31, but since the key groove 36c and the key projection 31a are engaged with each other the sleeve 36a is not able to move in the rotation direction of the free shaft 31 and the sleeve 36a also rotates with rotation of the free shaft 31.
Further, a pin bracket 34 is provided at an upper position of the fixed frame 33, above the drive force transmission engagement section 36. A latch hole 35 is formed in the pin bracket 34, and a latch unit 5, being latch fixing means provided on the mounting/unmounting unit 4, can be latched.

In this way, the fixed drive unit 2 and the fixed bearing unit 3 are provided at width direction end sections of the link section A, and fixed to a frame 107 of the drive conveyor 100. In this manner, by attaching and locking the freely detachable mounting/unmounting unit 4 to the fixed drive unit 2 and the fixed bearing unit 3, the mounting/unmounting unit 4 is also fixed to the link section A.

That is, this mounting/unmounting unit 4 can be freely attached or detached between the fixed drive unit 2 and the fixed bearing unit 3, and in a state where the fixed drive unit 2 and the fixed bearing unit 3 are fixedly engaged, a chain belt 41 is suspended so as to correspond to the width of the conveyor belt 103 of the drive conveyor 100.
The mounting/unmounting unit 4 will be described in the following based on Fig. 7. Fig. 7 is an explanatory drawing showing a mounting/unmounting unit 4, with (a) being a front explanatory drawing of the mounting/unmounting unit 4, (b) being a plan explanatory drawing of the mounting/unmounting unit 4, and (c) being an enlarged front explanatory drawings of an end section of the mounting/unmounting unit 4. Incidentally, for the purposes of description in Fig. 7, the chain belt 41 wound around the mounting/unmounting unit in each of the drawings is shown cut away.
The chain belt 41 is formed of a caterpillar type belt by an assembly of a plurality of chain parts, and varies in shape so as to wind around a sprocket that is capable of sliding in the conveyance direction, but does not vary in shape in a direction orthogonal to the conveyance direction. Constructing the chain belt 41, chain parts having a width in the conveyance direction of 60 mm and 120 mm are alternately combined up to a width of 690 mm, but it is possible to form a chain belt 41 having a desired conveyance width using combinations of these chain parts. Incidentally, the chain belt 41 is the resin chain belt used from the related art, and so detail is omitted.

As shown in Fig. 7, the mounting/unmounting unit 4 is comprised of a sprocket shaft 43 having a plurality of drive sprockets 42 fixed at specified intervals for meshing with the chain belt 41 . Further, slide shafts 44 for suspending the chain belt 41 are provided at an upper part of the sprocket shaft 43 of the mounting/unmounting unit 4, facing side by side. A distance between centers of two of the slide shafts 44 constitutes the effective length for conveying of the link conveyor 1. Further, flat-plate shaped slide plates 45 are arranged between two slide shafts 44, so as to be the same height as the slide shafts 44, and support a load from above acting on the chain belt 45 bridging between the drive sprocket 42 and the slide shafts 44.
The mounting/unmounting unit 4 has the above described structure, to constitute a link conveyor which is a drive conveyor having a large conveyance width and extremely short and elongated conveyance length. Also, on the sprocket shaft 43 constituting both ends of the mounting/unmounting unit 4, engagement means capable of freely detachably engaging with the shaft connecting section 46 connecting to the drive shaft 24 of the respective fixed drive units 2, and the free shaft 31 of the fixed bearing unit 3, is provided on end sections. Specifically, as shown in Fig. 2 and Fig. 5, a key projection section 46a is provided on the shaft connecting section 46, similarly to the key projection section 31a provided on the drive shaft 24 of the fixed dive unit 2, and the key projection section 31a provided on the free shaft 31 of the fixed bearing unit 3. In this way, the shaft connecting section 46 transmits rotational drive force of the drive shaft 24 and the free shaft 31 using the slide capable sleeves 25a and 36a, and also enters a state not provided fixed to the drive shaft 24 and the free shaft 31, which means that the mounting/unmounting unit 4 can be freely attached and detached with respect to the fixed drive unit 2 and the fixed bearing unit 3.

Also, a latch unit 5, being latch fixing means, is provided above the shaft connecting section 46. The latch unit 5, at the time of attachment, is capable of locking by passing through the latch hole 27 of the fixed drive unit 2 and the latch hole 35 of the fixed bearing unit 3, and when removed is capable of being pulled out from the latch hole 27 and the latch hole 35 by movement of a pin etc. Then, in the mounting/unmounting unit 4, the drive sprocket 42, sprocket shaft 43, slide shafts 44, slide plates 45 and latch unit 5 are respectively formed as the mounting/unmounting unit.
Specifically, as shown in Fig. 5 and Fig. 8, the latch unit 5 has a latch frame 51 formed into an angular U-shape in plan view integrally fixed to the slide shafts 44 and slide plates 45, for example, and beneath, the sprocket shaft 43 is freely rotatably inserted. Also, a latch body 52 is fixed to both upper sides of the latch frame 51 (upper and lower sides in Fig. 8).

In the following, the latch unit 5 will be described in detail based on Fig. 9. Fig. 9 is an explanatory drawing of a latch body 52 of a latch unit 5, with (a) being a side explanatory drawing, (b) being a plan explanatory drawing and (c) being a front explanatory drawing. The latch body 52 comprises a latch case 53, a latch lever 54, a lever pin 55 and a spring 56. The latch case 53 is formed from a cylindrical case having a hollow section in which the latch lever 54 can slide, and a fixing section 53a for fixing to the latch frame 51 extends at the side surface of the cylinder. Then, as shown in Fig. 5 and Fig 8, the latch case 53 is respectively fixed to both upper and lower ends of the latch frame 51. On the other hand, the latch lever 54 is formed in a cylindrical pin shape capable of sliding inside the latch case 53, and the lever pin 55 juts up from a side surface of the pin. The latch lever 54 is then slidably encapsulated in the latch case 53, and a pin movable hole 52b having a length such that the encapsulated latch lever 54 does not jump out is provided in the latch case 53. The pin movable hole 52b is formed so that the lever pin 55 of the encapsulated latch lever 54 can move. Also, a fixing time latch hole 53c in which the lever pin 55 can rotate by 180 degrees at the side surface of the latch case 53 when latching is provided in upper and lower sections of the pin movable hole 52b. Accordingly, the latch lever 54 encapsulated in the latch case 53 is capable of sliding inside the latch case 53 at a position where the lever pin 55 is aligned with the pin moveable hole 52b, sliding of the latch lever 54 is restricted in a state where the lever pin 55 has been rotated to a position that is not aligned with the movable pin hole 52b at a position of the fixing time latch hole 53c that is provided orthogonal to the pin movable hole 52b, and in a state where the lever pin 55 is latched in the fixing time latch hole 53c there is a state where the tip end 54a of the latch lever 54 projects into the latch case 53, or a state where the latch lever 54 is positioned inside the latch case 53. Inside the latch case 53, a spring 56 is provided, normally urging the rear end 53b of the latch lever 54.

With the latch unit 5 constructed in this way, when the mounting/unmounting unit 4 is positioned at the fixed drive unit 2 and the fixed bearing unit 3 and fixedly attached, the latch lever 54 is positioned at the latch hole 27 provided in the latch bracket 26 of the fixed drive unit 2 and the latch hole 35 provided in the pin bracket 34 of the fixed bearing unit 3, the latch lever 54 is rotated to a state where it projects from an internal position of the latch case 53, and is inserted into the latch hole 27 and the latch hole 35, and in this way the mounting/unmounting unit 4 is fixedly attached between the fixed drive unit 2 and the fixed bearing unit 3. Obviously, at this time the sleeve 25a, and sleeve 36a are also respectively latched and fixed to the sprocket shaft 43.
As has been described above, the latch body 52 of the latch unit 5 constitutes a bolt-shaped latch section with the latch hole 27 or the latch hole 35.
Accordingly, in a state where the lever pin 55 of the latch lever 54 is aligned with the fixing time latch hole 53c, the latch lever 54 normally has a tip end 54a held in a state projecting from the latch case 53, which means that in a state where the mounting/unmounting unit 4 is attached to the fixed drive unit 2 and the fixed bearing unit 3, the latch unit 5 does not spontaneously drop away from the fixed drive unit 2 or the fixed bearing unit 3. Also, when removing the mounting/unmounting unit 4, the lever pin 55 is moved to the removal time latch hole 53d, and the tip 54a of the latch lever 54 is positioned inside the latch case 53.

As shown in Fig. 1 to Fig. 4, the link conveyor 1 constructed in this way is capable of delivering objects to be conveyed W that have been conveyed from an upstream drive conveyor 100 to a downstream drive conveyor 100, at a link section A that is a gap provided adjacent to the drive conveyor 100.

Incidentally, with the above described embodiment, the structure is such that the drive motor 21 and governor 22, being drive means, are provided in the fixed drive unit 2, and the mounting/unmounting unit 4 is rotatably driven, but it is also possible, for example, for any of the drive sprockets 42 of the mounting/unmounting unit 4 to be capable of being rotatably driven by the mounting/unmounting unit 4 itself using a motor roller housed inside a motor, being drive means. In this case, a fixed bearing unit 3 is provided on both ends.
By constructing the link conveyor 1 in this way, it is possible to simplify the structure of a fixed drive unit 2 and fixed bearing unit 3, which are attachment sections for the mounting/unmounting unit 4, and further, there are also situations where adopting a method of transmitting drive force from a motor roller house inside a motor or an adjacent drive conveyor 100 is more cost effective than separately providing the drive motor and the governor.

### Industrial Applicability

A plurality of link conveyors are arranged next to drive conveyors, and can be utilized in factories that convey items, and can be utilized when preventing conveyed items dropping into gaps between adjacently positioned drive conveyors or conveyance being delayed or a backlog building up, and so can be utilized in situations such as when using drive conveyors that are positioned next to each other.

### INDUSTRIAL APPLICABIITY

With a drive conveyor constituting a conveyance path of a food factory etc., there is always the need for periodic repair and maintenance, and so in this type of situation also, it is possible to repair and maintain a link conveyor rapidly without stopping the drive conveyor for a long time.
In particular, by providing key projection sections on respective drive shafts of the fixed drive sections and the mounting/unmounting unit, drive force transmission between the fixed drive sections and the mounting/unmounting unit is coupled by a sleeve in which a key groove is formed, and further, by having engagement and disengagement between the unit engagement means of the fixed drive sections and the engagement fixing means of the mounting/unmounting unit in the form of a latch, it is possible to attach and detach the mounting/unmounting unit without the need for a tool.

## Claims

1. A link conveyor (1), arranged at link sections (A) between drive conveyors (100) arranged adjacently, for continuously conveying objects to be conveyed, comprising:
a pair of fixed drive sections (2, 3), arranged facing both width direction end sides of the drive conveyors (100) arranged adjacent to the link sections (A), and fixed to a frame (107) of the conveyor (100), each provided with one of drive sections (2, 3) for driving the link conveyor (1); and
a mounting/unmounting unit (4) constituting a conveyance section with a chain belt (41), formed using a caterpillar type belt, bridging between a drive shaft (24) and a bridging shaft,
**characterized in that**
drive force transmission engagement means (36), axially supporting the drive shaft (24) of the mounting/unmounting unit (4) in a detachable manner, and capable of transmitting drive power, is provided at the pair of fixed drive sections (2, 3), engagement means (46) that can be attached to and detached from the drive force transmission engagement means (36) is provided in the drive shaft (24) of the mounting/unmounting unit (4), and the mounting/unmounting unit (4) is freely attachable to or detachable from the fixed drive sections (A).

2. The link conveyor according to claim 1, further comprising:
unit engagement means (26) capable of freely detachably attaching the mounting/unmounting unit (4) is provided at the pair of fixed drive sections (2, 3), and
engagement fixing means (5) capable of latching to the unit engagement means (26) is provided in the mounting/unmounting unit (4).

3. The link conveyor (1) according to claim 2,
wherein the mounting/unmounting unit provides drive means (21, 22) capable of driving the drive shaft (24), and wherein the unit engagement means (26) is also capable of freely detaching the mounting/unmounting unit (4).

## Patentansprüche

1. Kettenförderer (1) oder Verbindungsförderer, welcher an Verbindungsabschnitten (A) zwischen angetriebenen Fördermitteln (100), welche benachbart angeordnet sind, angeordnet ist, um zu fördernde Objekte kontinuierlich zu fördern, umfassend:
ein Paar feststehender Antriebsabschnitte (2, 3), welche angeordnet sind, um beiden Endseiten in Breitenrichtung der angetriebenen Fördermittel (100) gegenüberzuliegen, welche an den Verbindungsabschnitten (A) angrenzend angeordnet sind, und welche an einem Rahmen (107) des Fördermittels (100) befestigt sind, wobei jedes mit einem Antriebsabschnitt (2, 3) zum Antreiben des Kettenförderers (1) versehen ist; und
eine Montage-/Demontageeinheit (4), welche mit einem Kettenband (41), welches unter Verwendung eines Bands vom Typ Caterpillar ausgebildet ist, einen Förderungsabschnitt bildet, und zwischen einer Antriebswelle (24) und einer Überbrückungswelle überbrückt,
**dadurch gekennzeichnet, dass**
ein Antriebskraftübertragungs-Eingriffsmittel (36), welches axial die Antriebswelle (24) der Montage-/Demontageeinheit (4) in einer lösbaren Art und Weise stützt und fähig ist, Antriebskraft zu übertragen, an dem Paar feststehender Antriebsabschnitte (2, 3) bereitgestellt ist,
ein Eingriffsmittel (46), welches an dem Antriebskraftübertragungs-Eingriffsmittel (36) befestigt und von demselben gelöst werden kann, an der Antriebswelle (24) der Montage-/Demontageeinheit (4) bereitgestellt ist, und
die Montage-/Demontageeinheit (4) frei an den feststehenden Antriebsabschnitten (A) befestigbar und von diesen lösbar ist.

2. Kettenförderer nach Anspruch 1, ferner umfassend:
ein Einheit-Eingriffsmittel (26), welches fähig ist, die Montage-/Demontageeinheit (4) frei lösbar zu befestigen, und an dem Paar feststehender Antriebsabschnitte (2, 3) bereitgestellt ist, und
ein Eingriffs-Befestigungsmittel (5), welches fähig ist, in die Einheit-Eingriffsmittel (26) einzurasten, und in der Montage-/Demontageeinheit (4) bereitgestellt ist.

3. Kettenförderer (1) nach Anspruch 2,
wobei die Montage-/Demontageeinheit Antriebsmittel (21, 22) bereitstellt, welche dazu fähig sind, die Antriebswelle (24) anzutreiben, und
wobei das Einheit-Eingriffsmittel (26) ebenfalls fähig ist, die Montage-/Demontageeinheit (4) frei zu lösen.

## Revendications

1. Convoyeur à maillons (1), agencé sur des sections à maillons (A) entre des convoyeurs de commande (100) disposés en adjacence, pour le convoyage en continu d'objets devant être convoyés, comprenant :
une paire de sections de commande stationnaires (2, 3) agencées en opposition réciproque sur les côtés terminaux dans la direction de largeur des convoyeurs de commande (100) disposés en adjacence aux sections à maillons (A), et fixées sur un cadre (107) du convoyeur (100), chacune étant prévue avec une des sections de commande (2, 3) pour commander le convoyeur à maillons (1) ; et
une unité de montage/démontage (4) constituant une section de convoyage avec une courroie à chaîne (41), formée par l'utilisation d'une chaîne du type « caterpillar », réalisant un pontage entre une tige de commande (24) et une tige de pontage,
**caractérisé en ce que**
un moyen d'engagement de transmission de force de commande (36), soutenant axialement de manière amovible la tige de commande (24) de l'unité de montage/démontage (4), et étant capable de transmettre la force de commande, est prévu sur la paire de sections de commande stationnaires (2, 3), et **en ce que** le moyen d'engagement (46) qui peut être fixé sur le et retiré du moyen d'engagement de transmission de force de commande (36) est prévu dans la tige de commande (24) de l'unité de montage/démontage (4) et **en ce que** l'unité de montage/démontage (4) peut être fixée librement sur les ou retirée des sections de commande stationnaires (A).

2. Convoyeur à maillons conformément à la revendication 1, comprenant en outre :
un moyen d'unité à engagement (26) capable de fixer librement de manière détachable l'unité de montage/démontage (4), lequel est prévu sur la paire de sections de commande stationnaires (2, 3), et
un moyen de fixation d'engagement (5) capable de s'enclencher sur le moyen d'unité à engagement (26), lequel est prévu dans l'unité de montage/démontage (4).

3. Convoyeur à maillons (1) conformément à la revendication 2,
dans lequel l'unité de montage/démontage fournit des moyens de commande (21, 22) capables de commander la tige de commande (24), et
dans lequel le moyen d'unité à engagement (26) est aussi capable de retirer librement l'unité de montage/démontage (4).
